(19) Europäisches Patentamt
European Patent Office
Office européen des brevets

(11) **EP 2 033 472 B1**

(12) **EUROPÄISCHE PATENTSCHRIFT**

(45) Veröffentlichungstag und Bekanntmachung des Hinweises auf die Patenterteilung:
**22.09.2010  Patentblatt 2010/38**

(21) Anmeldenummer: **07764703.0**

(22) Anmeldetag: **19.06.2007**

(51) Int Cl.:
***H04W 4/00*** *(2009.01)*

(86) Internationale Anmeldenummer:
**PCT/EP2007/005363**

(87) Internationale Veröffentlichungsnummer:
**WO 2008/000368 (03.01.2008 Gazette 2008/01)**

(54) **VERFAHREN UND VORRICHTUNG ZUR FUNKTRÄGERAUSWAHL BEI FUNKÜBERTRAGUNGSSYSTEMEN**

METHOD AND APPARATUS FOR RADIO CARRIER SELECTION IN RADIO TRANSMISSION SYSTEMS

PROCEDE ET APPAREIL DE SELECTION DE PORTEUSE RADIOELECTRIQUE SUR LES SYSTEMES DE TRANSMISSION RADIOELECTRIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.06.2006   DE 102006029878**

(43) Veröffentlichungstag der Anmeldung:
**11.03.2009   Patentblatt 2009/11**

(73) Patentinhaber: **T-Mobile International AG
53227 Bonn (DE)**

(72) Erfinder: **ECHENSPERGER, Heimo
82538 Geretsried (DE)**

(74) Vertreter: **Riebling, Peter
Patentanwalt,
Postfach 31 60
88113 Lindau/B. (DE)**

(56) Entgegenhaltungen:
WO-A-00/07384      WO-A-01/19108
US-A- 5 396 647      US-A1- 2003 003 922

## Beschreibung

Die Erfindung betrifft das Gebiet der Funk- oder drahtlosen Netzwerke, die Signale übermitteln, um Informationen zu und von mobilen Objekten zu übertragen, und Insbesondere ein Verfahren zur Funkträgerauswahl bei Funkübertragungssystemen.

Ein mobiles Objekt, z.B. ein Zug, ein Schiff, ein Lastwagen, usw., folgt in der Regel einer vordefinierten Route auf entsprechenden Verkehrswegen, z.B. Eisenbahnschienen, einem Fluss, einer Straße, usw. Diese Verkehrswege werden gewöhnlich von einem oder mehreren Funkübertragungssystemen mit Funksignalen versorgt. Das heißt, entlang der Routen dieser Verkehrswege werden ein oder mehrere Funkträger ausgestrahlt, die dazu verwendet werden können, um Informationen von und zu einer am mobilen Objekt befindlichen mobilen Sende-Empfangseinheit, im folgenden auch mobile Einheit genannt, zu übermitteln. Um die optimale Leistung und Qualität der Informationsübertragung bereitzustellen, ist es für die mobile Einheit erforderlich, an jeden Ort entlang der befahrenen Route den besten Funkträger - entweder einen einzigen oder mehrere im Zusammenwirken - gemäß besonderer Anwendungsanforderungen auszuwählen, um die höchste Qualität im Verhältnis zu der ausgeführten Anwendung zu erhalten.

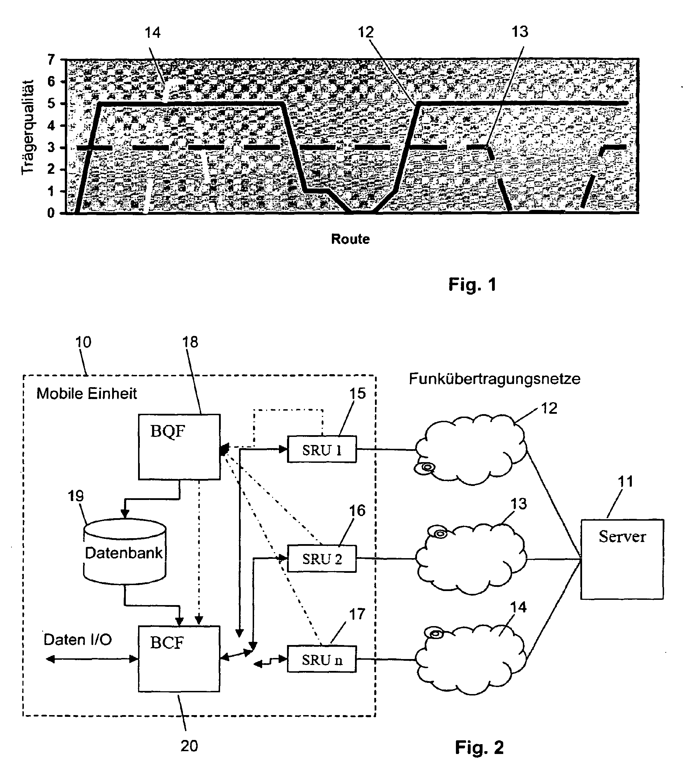

Figur 1 zeigt an einem Beispiel die Funkabdeckung und Qualität von mehreren Funkträgern A, B, C entlang einer gegebenen Route. Die Qualität der Funkträger ist schematisch in Stufen von 0 bis 7 dargestellt. Es wird angenommen dass sich ein mobiles Objekt entlang dieser Route bewegt. Das mobile Objekt verfügt über eine mobile Einheit, die für eine Kommunikation über die Funkträger A, B und C eingerichtet ist. Obwohl die Träger A und B die meiste Zeit zur Verfügung stehen, wäre Träger A zunächst die erste Wahl für eine Funkübertragung, weil er für den Großteil der Route verfügbar ist und die beste Qualität bereitstellt. Die "Qualität" im Zusammenhang mit diesem Dokument ist ein abstrakter Wert bezogen auf die Eignung des entsprechenden Trägers in Hinsicht auf die Anforderungen der Anwendung und kann von einem oder mehreren Parametern des Trägers abgeleitet werden. Qualität beinhaltet in diesem Zusammenhang auch die Priorität der Trägerauswahl, weil stets der Träger mit der höchsten Qualität ausgewählt wird. In der Lücke, also dem Abschnitt der fehlenden Verfügbarkeit des Trägers A, etwa in der Mitte der Grafik, würde die mobile Einheit den Träger B selektieren, da nur er hier aktiv ist und die Funkversorgung sicherstellen kann. Weiter links ist auch Träger C für einen kurzen Zeitraum aktiv und stellt eine höhere Qualität als Träger A bereit, so dass in diesem Abschnitt der Route Träger C ausgewählt werden würde.

Um eine zweckdienliche Auswahl des Trägers zu ermöglichen, werden die Funkträger seitens der mobilen Einheit mittels entsprechenden Sende-/Empfangeinheiten (SRUs), z. B. Modems, empfangen. Die SRUs stellen Informationen über die Qualität des Funkkanals anhand von gemessenen Qualitätsparametern bereit, die umfassen können:

- Signalstärke,
- Signal-/Rausch-Verhältnis,
- verfügbare Bandbreite
- etc.

Ein Problem bei der Auswahl des besten Trägers ist, dass die aktuellen Messwerte der SRUs keine Informationen über die zukünftige Signalqualität enthalten, die erwartet werden kann, wenn man sich weiter entlang der Route bewegt. Demzufolge könnte der fehlerhafte Empfang oder Nichtempfang eines Trägers zu ungeeigneten oder fehlerhaften Entscheidungen bei der Auswahl des besten Trägers führen, weil die Qualität des Trägers für kurze Zeit unter ein verwendbares Niveau fallen kann oder entsprechend umgekehrt. Fehlerhaft kann in diesem Zusammenhang ebenfalls beinhalten, dass sich die mobile Einheit zu schnell bewegt, um sich in vernünftiger Weise eines Trägers zu bedienen, aufgrund der dann geringen Verweilzeit der mobilen Einheit im Versorgungsbereich eines Trägers.

WO 01/19108 A1 offenbart ein Verfahren zur Auswahl eines Funkträgers aus einer Anzahl von verfügbaren Funkträgern bei Funkübertragungssystemen, bei dem seitens einer mobilen Einheit eine Auswahl des jeweils besten Funkträgers in Abhängigkeit des Aufenthaltsortes der mobilen Einheit vorgenommen wird. Die Auswahl kann anhand von der mobilen Einheit aktuell ermittelten und bereits vorhandenen Informationen über die Qualität der verfügbaren Funkträger durchgeführt werden.

Ähnliche Verfahren sind in den Schriften US 5 396 647 A, WO 00/07384 A1 und US 2003/003922 A1 offenbart.

Es ist die Aufgabe der Erfindung, für mobile Objekte, die sich entlang einer Route bewegen, ein Verfahren zur Trägerauswahl zwischen einem oder mehreren Trägern aus einer Vielzahl von verfügbaren Funkträgern anzugeben, das die besten Ergebnisse in Bezug auf die Qualitätsanforderungen der Signalübertragung liefert.

Diese Aufgabe wird erfindungsgemäß durch ein Verfahren mit den Merkmalen des Anspruchs 1 gelöst.

Bevorzugte Ausgestaltungen und weitere vorteilhafte Merkmale der Erfindung sind in den abhängigen Ansprüchen angegeben, auf deren Offenbarung an dieser Stelle unmittelbar Bezug genommen wird.

Im Zusammenhang mit dieser Erfindung ist die Auswahl eines Trägers gleichbedeutend mit der Auswahl eines oder mehrerer Träger (Multiplexing), für die dieselben Qualitätsergebnisse des Auswahlprozesses gelten.

Die Erfindung geht davon aus, dass eine mobile Einheit einer vordefinierten Route auf einem Verkehrsweg folgt, z. B. wie ein Zug. Die Route ist der mobilen Einheit zuvor bekannt oder wird von der mobilen Einheit wiederholt durchquert. Erfindungsgemäß werden bereits vorhandene Informationen über die Verfügbarkeit und die Qualität eines jeden Funkträgers entlang der Route dazu verwendet, um eine Entscheidung zur Auswahl des besten Trägers zu treffen und die Prozedur eines Wechsels (Handover) zwischen verschiedenen Trägern zu optimieren. Informationen über die Verfügbarkeit und die Qualität eines jeden Funkträgers entlang der Route können von der mobilen Einheit selbst während vorangegangenen Fahrten entlang dieser Route ermittelt, gespeichert und bei zukünftigen Fahrten entlang dieser Route verwendet werden. Die Informationen können der mobilen Einheit aber auch von Dritten zur Verfügung gestellt werden. Die Qualitätsinformationen über einen Funkträger, die ein Auswahlkriterium für den zu verwendenden Träger sein können, könnten sein:

Datendurchsatz, Übermittlungsverzögerung, Kontinuität, Bitfehlerrate (Bit Error Rate, BER) und Paritätsfehlerrate (Parity Error Rate, PER).

Zusätzlich zu den oben angegebenen Parametern kann eine Analyse des Datenflusses (z. B. volle Zustandskontrolle) oder können besondere Messpakete zu einem zugeordneten Server mit vorhersagbaren Reaktionszeiten verwendet werden, um die Informationen über die erwartete Qualität eines Trägers zu verbessern.

Die Informationen über die Qualität eines jeden Trägers entlang einer Route werden in einer Datenbank der mobilen Einheit geordnet nach geographischen Positionen oder Entfernungen (Zeit) von der Start- oder Zielposition gespeichert. Bei jeder Fahrt werden die in dieser Datenbank gespeicherten Informationen mit den aktuellen Qualitätsmesswerten des entsprechenden Trägers seitens der mobilen Einheit verglichen. Die bereits gespeicherten Informationen werden bei Überschreitung einer festgestellten Abweichung zwischen den gespeicherten und den aktuell erfassten Messwerten korrigiert, um die Datenbank ständig aktuell an eine sich möglicherweise ändernde Trägerqualität entlang der Route anzupassen, z. B. wenn Basisstationen des Funkübertragungssystems hinzugefügt oder entfernt werden oder wenn sich die Signalausbreitungsbedingungen ändern.

Während die mobile Einheit sich entlang der Route bewegt, vergleicht sie nicht nur die aktuellen Messwerte der Trägerqualität mit den entsprechenden Werten in der Datenbank, sondern sie kann der Datenbank bereits im voraus die zu erwartende Trägerqualität für den weiteren Verlauf der Route entnehmen. Das heißt, dass die mobile Einheit erfindungsgemäß einen alternativen Träger auswählen kann, schon bevor der bisher verwendete Träger einen vordefinierten Schwellenwert für die Trägerqualität unterschreitet. Wenn ein besserer Träger erwartet wird, kann die mobil Einheit der Datenbank entnehmen, ob die Funknetzabdeckung dieses Trägers im Hinblick auf die derzeitige Geschwindigkeit der mobilen Einheit ausreichend lange besteht, so dass sich eine Auswahl dieses Trägers lohnt. Dadurch kann ein vorschneller und fehlerhafter Wechsel des Trägers vermieden werden. Der Begriff "Funknetzabdeckung" bedeutet in diesem Zusammenhang die Verfügbarkeit eines Trägersignals auf einem Niveau, das eine sichere Übertragung von Daten über die Funkschnittstelle ermöglicht.

Ein Ausführungsbeispiel der Erfindung wird nachfolgend anhand der Zeichnungen beschrieben.

Figur 1 zeigt an einem Beispiel die Funknetzabdeckung und Qualität von mehreren Funkträgern A, B, C entlang einer gegebenen Route.

Figur 2 stellt die logische Struktur eines Systems gemäß der Erfindung dar.

Figur 3 zeigt die Verfahrensweise eines Updates der Datenbank der Trägergeschichten.

Figur 4 zeigt ein Beispiel zum Feststellen der Mindestverfügbarkeit eines Trägers.

Figur 5 zeigt beispielhaft das Ende der Vorhersage der Funkabdeckung.

In Figur 6 zeigt die zur Verfügung stehende Bandbreite für die Verkehrslast ohne eine frühe Nutzung des Trägers.

In Figur 7 ist eine frühe Nutzung des Trägers B dargestellt, wobei der Träger B früher zu einem Zeitpunkt $T_E$ aktiviert wird.

Figur 8 zeigt entsprechend Figur 4 kartographisch den Verlauf einer Route und die Abdeckung der Route mit verschiedenen Funkträgern.

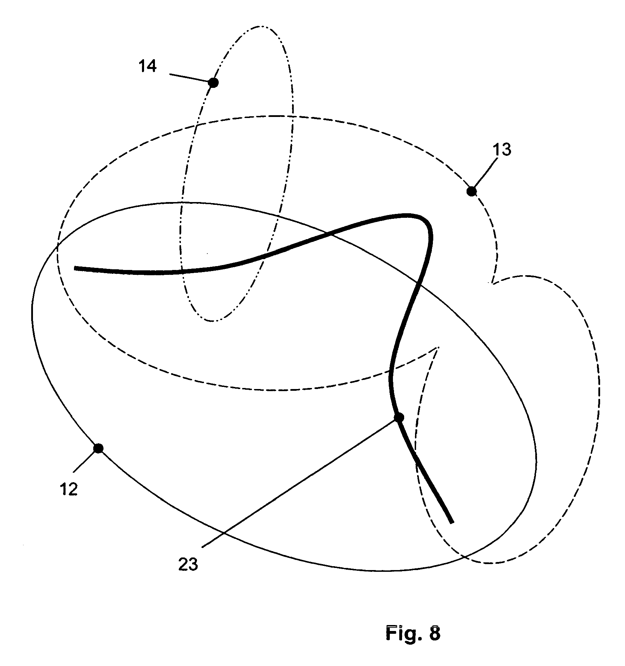

Figur 2 stellt die logische Struktur eines Systems gemäß der Erfindung dar. Eine mobile Einheit 10, die sich beispielsweise entlang einer Route 23 (Figur 8) bewegt, beinhaltet eine Datenquelle/-senke (nicht gezeigt), die mit einem Serversystem 11 über ein oder mehrere Funkübertragungssysteme 12, 13, 14 kommuniziert. Darüber hinaus beinhaltet die mobile Einheit 10 eine Anzahl von Sende-Empfangs-Einheiten (SRUs) 15, 16, 17 wobei jede einem Funkträger eines mobilen Funkübertragungssystems dient. Die SRUs 15, 16, 17 messen ständig die Qualität ihres zugeordneten Funkträgers anhand von geeigneten Parametern, wie Datendurchsatz, Übermittlungsverzögerung, Kontinuität, Bitfehlerrate, Paritätsfehlerrate, etc. Eine in der mobilen Einheit vorhandene Trägerqualitätsfunktion (BQF) 18 liest die Qualitätsparameter der empfangenen Träger 12-14 von den SRUs ab und berechnet daraus für jeden Funkträger eine entsprechende Trägerqualität. Bewegt sich die mobile Einheit 10 entlang einer Route 23, so wird für eine Anzahl von geographischen Positionen entlang diese Route 23 eine entsprechende Anzahl von Trägerqualitäten ermittelt und in einer Datenbank 19 gespeichert. Die Trägerqualitäten entlang der Route können beispielsweise an äquidistanten Positionen oder aber in bestimmten Zeitintervallen erfasst werden,

Bewegt sich die mobile Einheit nun erneut entlang der selben Route 23, so liest eine in der mobilen Einheit 10 vorhandene Trägerkontrollfunktion (BCF) 20 die zuvor für diese Route ermittelten Trägerqualitäten aus der Datenbank 19 aus und vergleicht sie mit den aktuellen Messwerten der SRUs 15-17. Basierend auf den aktuellen Messwerten der Trägerqualitäten und den in der Datenbank 19 gespeicherten historischen Messwerten kann die Trägerkontrollfunktion 20 eine entsprechende Entscheidung für die Auswahl des besten Trägers treffen.

Figur 2 enthält keinerlei physische Implementierung der Erfindung. Die Einheiten BQF 18, BCF 20 und SRU 15-17 können als ein oder mehrere physikalische Grundbausteine innerhalb der mobilen Einheit 10, so wie dies zweckdienlich ist, implementiert werden.

Statistischer Verlauf der Funkabdeckung

Die BQF 18 ermittelt einen statistischen Verlauf der Funknetzabdeckung (SCH), d.h. die Signalqualität eines jeden Trägers von einer früheren Fahrt entlang der Route 23 wird erfasst, gespeichert und gepflegt. Dabei berücksichtigt die BQF 18 bei jeder Fahrt der mobilen Einheit entlang einer "bekannten" Route 23 die aktuellen Messwerte der Trägerqualitäten und wendet hierfür für jeden Träger einen individuellen Gewichtsfaktor an, um die Änderungen in der Trägerqualitäten für diese Route aktuell anzupassen.

Festlegung des statistischen Verlaufs der Funkabdeckung

Während der ersten Fahrt entlang einer Route 23 erfasst die BQF 18 in vorbestimmten Zeitintervallen $T_i$ laufend die aktuelle Position $P_k$ der mobilen Einheit 10 und liest von den SRUs die zu diesen Positionen $P_k$ gehörenden aktuellen Trägerqualitäten ab., Dies ergibt eine Liste mit Positionsdaten und Trägerqualitäten mit einer gegenseitigen Entfernung $D(T_i)$. Die Zeitintervalle $T_i$ werden so gewählt, dass genügend Informationen im Verhältnis zur Geschwindigkeit v der mobilen Einheit und der Zellengröße eines Funkträgers erfasst werden können, so dass nachfolgend eine korrekte Auswahl des besten Trägers getroffen werden kann. Dies kann auch Überlegungen hinsichtlich der Zeit $T_{switch}$ beinhalten, um zwischen den Trägern hin- und herzuschalten. Demzufolge kann das Intervall von $T_i = f(1/v)$ abgeleitet werden.

Die Liste mit Positionsdaten und Trägerqualitäten wird in einer Weise gespeichert, dass sie wirksam vorwärts oder rückwärts verwendet werden kann entsprechend der Fahrtrichtung der mobilen Einheit entlang der Route 23. Für jeden Positionswert wird ein aktueller Wert des Qualitätsniveaus $L_n(P_k)$ eines jeden verfügbaren Trägers $B_n$ als Startwert gespeichert. Somit existiert für jeden Träger $B_n$ bei jeder Position $P_k$ ein entsprechender Wert von $L_{n,k}$ in der Datenbank, der die statistische Erfassungsgeschichte bildet.

Es wird empfohlen, eine Positionsliste $P_k$ mit $D(T_i) = const. = D(t=D/v)$ festzulegen, da die Funksignale mit der Distanz schwanken. Alternativ hierzu kann eine Positionsliste mit $D(T_i = const.)$ festgelegt werden. In diesem Fall erhält man Trägerqualitätswerte bei unterschiedlichen Distanzen in Abhängigkeit von der Geschwindigkeit der mobilen Einheit 10.

Festlegung der Qualitätsniveaus der Träger

Die Werte des Qualitätsniveaus $L_n(P_k)$ werden anhand der Messwerte der Signalqualität $Q_{n,m}$, z. B. SNR, berechnet, die eine jeweilige SRU 15-17 für ihren Träger bereitstellt. Die Berechnung von $L_n(P_k)$ von den verschiedenen Werten $Q_{n,m}$ wird normiert, z. B. durch Gewichtsfunktionen, so dass die Werte $L_{n,k}$ hinsichtlich der Anforderungen des Informationsübertragung (beispielsweise verfügbare Bitfehlerrate, Bandbreite) eines Trägers direkt mit der $L_{n,k}$ eines anderen Trägers verglichen werden können.

Anpassung des statistischen Verlaufs der Funknetzabdeckung

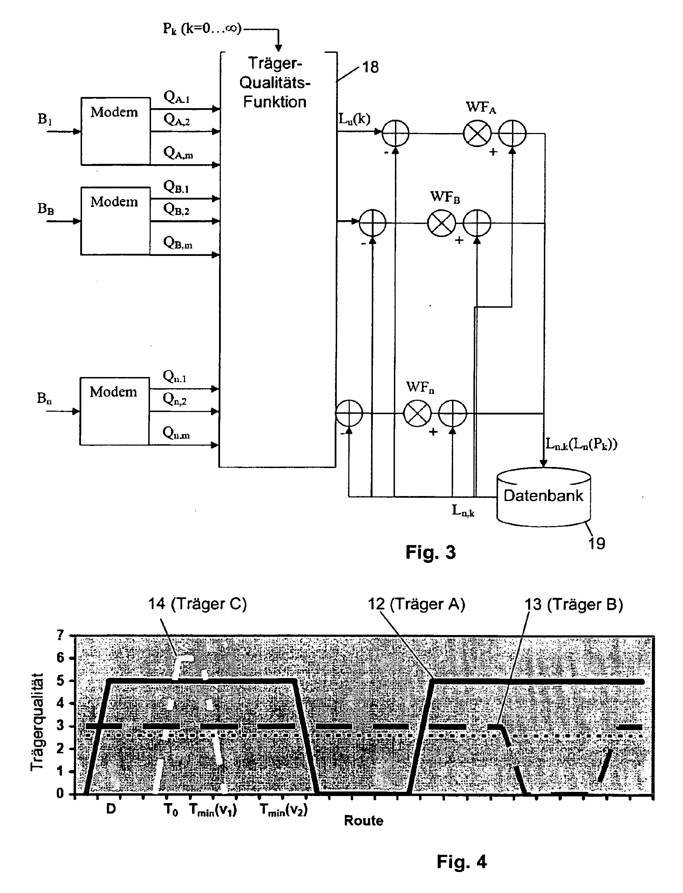

Figur 3 zeigt die Verfahrensweise einer Aktualisierung der Datenbank der Trägerqualitäten. Bei wiederholten Fahrten entlang einer Route 23 wird die Trägerqualität für jeden Träger bei jeder Position $P_k$, so wie zuvor beschrieben, festgelegt. Der Unterschied zwischen dem sich daraus ergebenden aktuellen Qualitätsniveau $L_n(P_k)$ und dem bei dieser Position gespeicherten Qualitätsniveau $L_{n,k}$ wird mit einer Gewichtsfunktion $WF_n$ multipliziert und zu dem gespeicherten Qualitätsniveau $L_{n,k}$ addiert, was zu einem neuen durchschnittlichen Qualitätsniveau $L_{n,k}$ führt, das in der Datenbank gespeichert wird.

$$L_{n,k}(L_n(P_k)) = WF_n \, (L_n(P_k) - L_{n,k}) \qquad [\text{Gleichung 1}]$$

Die Gewichtsfunktion $WF_n$ legt fest, wie schnell Änderungen der Qualität des Trägers in die Erfassungsgeschichte einfließen, was auch davon abhängt, ob eine lineare oder nicht-lineare Funktion ausgewählt wird (Figur 3).

Auf der Historie der Trägerqualitäten basierende Trägerauswahl

Während der Bewegung der mobilen Einheit entlang der Route 23 liest die BCF 18 in einem "passenden" Intervall $T_i$ oder bei bestimmten Positionen $P_k$ die verschiedenen Qualitätsparameter $Q_{n,m}$ aller Träger $B_n$ von den SRUs 15-17 ein. Mit dieser Information wird das aktuelle Qualitätsniveau $L_n(P_k)$ eines jeden Trägers, so wie zuvor beschrieben, berechnet. Basierend auf $L_n(P_k)$ und den nachfolgenden Erwägungen kann der beste zu verwendende Träger ausgewählt werden.

Mindestverfügbarkeit des Trägers (Beginn der Funknetzabdeckung)

Um die erforderliche Qualität der Informationsübermittlung aufrechtzuerhalten, kann das Umschalten auf einen Träger mit höherer Priorität, der aber lediglich über einen kurzen Zeitraum hinweg zur Verfügung steht, vermieden werden. In diesem Umfang kann die Mindestzeit, die ein Träger zur Verfügung stehen muss, damit über ihn Informationen übermittelt werden können, definiert werden. Dadurch wird das Element der Geschwindigkeit der mobilen Einheit in den Auswahlprozess einbezogen, weil die Zeit, die ein Träger zur Verfügung steht, insbesondere von der Geschwindigkeit abhängt, mit der die mobile Einheit den Bereich der Funkabdeckung des Trägers durchquert.
Um ein unnötiges Hin- und Herschalten zwischen verschiedenen Trägern zu vermeiden, beispielsweise wenn ein Träger mit höherer Priorität entdeckt worden ist, der jedoch lediglich für eine kurze Zeitdauer hinweg zur Verfügung steht, kann die BCF 18 die zu erwartende Trägerqualität für eine Zeit $T_{min}$ im voraus prüfen. $T_{min}$ definiert die Zeit, die erforderlich ist, um zum Träger mit höherer Priorität und am Ende von dessen Funkabdeckung zurück zum vorhergehenden Träger zu schalten, zuzüglich der Zeit, die der Träger zur Übermittlung von Informationen zur Verfügung stehen soll. $T_{min}$ definiert also die Mindestzeit, die ein Träger zur Verfügung stehen muss, damit er beim Auswahlverfahren berücksichtigt wird. Wegen der Abhängigkeit von $T_{min}$ von der Geschwindigkeit der mobilen Einheit und unter der Voraussetzung, dass die Trägerqualitätsniveaus in gleichem Abstand in der Datenbank vorhanden sind, muss die BCF 18 eine Anzahl von x, mit

$$x = v \, T_{min} / D \qquad [\text{Gleichung 2}]$$

Einträgen der Datenbank vorausschauen und das zu erwartende Qualitätsniveau des Trägers aus der Datenbank auslesen. Wenn das erwartete Qualitätsniveau für den Eintrag x noch über dem Schwellenwert liegt, soll die BCF zum neuen Träger schalten; wenn das zu erwartende Qualitätsniveau des Eintrags x unter dem Schwellenwert liegt, soll die BCF beim derzeitigen Träger bleiben.
In Figur 4 ist ein Beispiel für die Feststellung der Mindestträgerverfügbarkeit dargestellt. Die mobile Einheit verwendet aktuell einen Träger A. Zum Zeitpunkt $T_o$ wird von der mobilen Einheit ein anderer Träger C mit einer besseren Qualität als Träger A detektiert. Der Träger C hat eine höhere Priorität, aufgrund des höheren Qualitätsniveaus, als der gegenwärtig verwendete Träger A, falls beide über einen bestimmten Schwellenwert liegen. Die BCF 20 wird auf die Datenbank 19 zugreifen und ausgehend vom Zeitpunkt $T_0$ eine Anzahl von x Einträgen vorausschauen, um eine Voraussage für die weitere Funkabdeckung des Trägers C treffen zu können. Falls bei einer aktuellen Geschwindigkeit $v_1$ der mobilen Einheit 10 die Qualität von Träger C zum Zeitpunkt $T_{min}(v_1)$ noch über dem Schwellenwert liegt, so soll die BCF 20 vom Träger A zum Träger C wechseln. Falls bei einer Geschwindigkeit $v_2$ der mobilen Einheit 10 zum Zeitpunkt $T_{min}(v_2)$ keine Funkversorgung durch den Träger C besteht, soll die BCF 20 beim derzeitigen Träger A bleiben.

Ende der Vorhersage der Funkabdeckung

Ein ähnliches Problem der fehlerhaften Auswahl entsteht, wenn es bei einem Träger zu kurzen Signalausfällen kommt. In diesem Fall soll vermieden werden, dass die BCF 20 zu einem anderen Träger mit möglicherweise geringerer Priorität schaltet, da der bisher verwendete Träger in Kürze erneut zur Verfügung stehen wird.

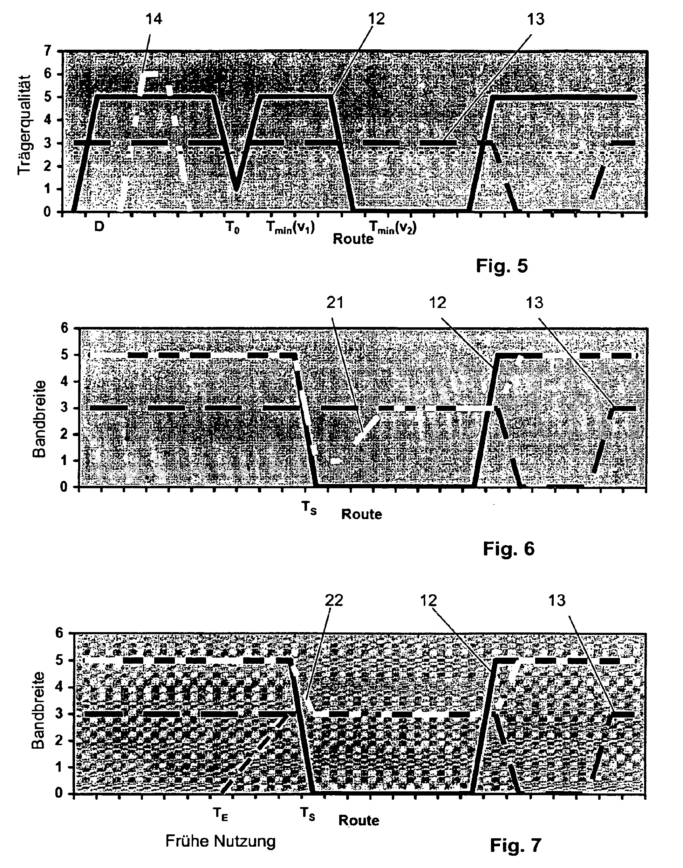

In der Figur 5 ist ein solches Szenarium dargestellt. Zum Zeitpunkt $T_o$ hat Träger A aus irgendeinem Grund einen kurzen Signalausfall. So wie zuvor beschrieben, kann die Gleichung 2 benutzt werden, um in der Datenbank 19 vorauszuschauen, wenn zu erwarten ist, dass ein Träger vollständig ausfällt, wie beispielsweise zum Zeitpunkt $T_{min}(v_2)$, oder in Kürze wieder zur Verfügung stehen wird, wie beispielsweise zum Zeitpunkt $(T_{min}(v_1)$, was von der derzeitigen Geschwindigkeit abhängt, mit der sich die mobile Einheit 10 bewegt.

Überprüfung der Funkabdeckung

Sowohl zu Beginn als auch am Ende einer Funkabdeckungsvorhersage müssen die erwarteten Daten aus der Datenbank 19 mit den aktuellen Messwerten der Trägerqualitäten abgeglichen werden. Wenn es eine bedeutsame Diskrepanz gibt, z. B. wegen eines Fehlers in einer Basisstation, muss unmittelbar eine Entscheidung zur Auswahl des besten Trägers basierend auf den aktuellen Messwerten getroffen werden. Um dies zu erreichen, muss die Anzahl der sich unterscheidenden Werte und die damit verbundenen Schwellenwerte von $L_n(P_k)$ gegenüber $L_{n,k}$ in Abhängigkeit von der Geschwindigkeit der mobilen Einheit 10 definiert werden.

Diese Überprüfung der Funkabdeckung ermöglicht es ebenfalls, Fehler zu entdecken, die ohne eine SCH nicht leicht entdeckt werden können. Gewisse Fehler in den Funkelementen sowohl der mobilen Einheit als auch der Basisstationen der Funkübertragungssysteme können nicht von dem Fall unterschieden werden, bei dem ein Funksignal einfach nicht zur Verfügung steht, weil der Sender ausgefallen ist, z. B. wegen eines defekten Antennenkabels. Aufgrund der SCH weiß man, ob es an einer gewissen Position eine Basisstation gibt. Wenn die erwarteten Messwerte eines Trägers nicht empfangen werden, kann ein Alarm ausgelöst werden, um die Prüfung des Systems entweder auf Seiten der Basisstation oder der mobilen Station anzustoßen.

Trägerfrühnutzung

Gewisse Funkträger stellen einem mobilen Kunden eine Bandbreite zur Verfügung, die vom Verkehrsaufkommen abhängt, den dieser Kunde erzeugt, z. B. UMTS oder HSPDA. Bei UMTS gibt es eine sogenannte Ramp-up-Funktion, die dem Kunden mehr Bandbreite zuordnet, je mehr Daten der Kunde übermittelt oder empfängt.

Mit den in der SCH verfügbaren Daten kann bestimmt werden, wann ein Wechsel zu einem Träger mit einer solchen Ramp-up-Funktion erfolgt. In Erwartung dieses Wechsels kann die BCF 20 mit einer frühen Nutzung eines Trägers beginnen, indem sie auf dem Träger mit einer Ramp-up-Funktion Dummy-Daten erzeugt, um die Bandbreite zugeordnet zu bekommen, bevor die Verkehrslast (payload) auf diesen Träger geschaltet wird.

In Figur 6 ist die zur Verfügung stehende Bandbreite 21 für die Verkehrslast ohne eine solche frühe Nutzung des neuen Trägers dargestellt. Zu einem Zeitpunkt $T_S$ wird vom Träger A auf den Träger B umgeschaltet. Auf dem Träger B wird eine anfängliche (geringe) Bandbreite bereitgestellt und erst dann entsprechend dem Bedarf erhöht, nachdem die Verkehrslast auf den Träger B geschaltet worden ist.

Figur 7 zeigt eine frühe Nutzung des Trägers B, das heißt der Träger B wird bereits zu einem Zeitpunkt $T_E$ aktiviert. Die Aktivierung veranlasst den Träger B, dem Teilnehmer die zur Verfügung stehende Bandbreite 22 bereits vor dem Zuschalten der Verkehrslast, zum Zeitpunkt TS, zuzuordnen, was dann bei der eigentlichen Umschaltung der Verkehrslast zum Zeitpunkt $T_S$ zu einer optimierten und insgesamt ausgeglichenen Zuteilung der verfügbaren stehenden Bandbreite führt.

Figur 8 zeigt schematisch einen geographischen Verlauf einer Route 23 und die Abdeckung der Route 23 mit Funksignalen mehrere Träger 12 bis 14. Die entsprechenden Trägerqualitäten sind in Figur 4 dargestellt.

**Liste der Bezugszeichen**

| | |
|---|---|
| 10 | mobile Einheit |
| 11 | Server |
| 12 | Funkübertragungssystem A, Träger A |
| 13 | Funkübertragungssystem B, Träger B |
| 14 | Funkübertragungssystem C, Träger C |
| 15 | Sende-Empfangseinheit |

16    Sende-Empfangseinheit
17    Sende-Empfangseinheit
18    Trägerqualitätsfunktion
19    Datenbank
20    Trägerkontrollfunktion
21    Bandbreite
22    Bandbreite
23    Route

**Patentansprüche**

1. Verfahren zur Auswahl eines Funkträgers aus einer Anzahl von verfügbaren Funkträgern bei Funkübertragungssystemen (12-14), bei dem seitens einer mobilen Einheit (10) eine Auswahl des jeweils besten Funkträgers (12-14) in Abhängigkeit des Aufenthaltsortes der mobilen Einheit (10) vorgenommen wird, wobei die Auswahl anhand von der mobilen Einheit (10) aktuell ermittelten und bereits vorhandenen Informationen über die Qualität der verfügbaren Funkträger durchgeführt wird, wobei in der mobilen Einheit (10) in Abhängigkeit von ihrer Bewegungsrichtung und Geschwindigkeit eine Vorhersage über die an einer zu passierenden geographischen Position und/oder zu einem vorbestimmten Zeitpunkt zu erwartende Qualität der Funkträger erstellt wird, und anhand dieser Vorhersage die Funkträgerauswahl erfolgt, **dadurch gekennzeichnet, dass** Fehler in einem Funkübertragungssystem anhand eines Vergleichs der von der mobilen Einheit (10) aktuell ermittelten Informationen über die Qualität der verfügbaren Funkträger mit den vorhandenen Informationen über die Qualität der verfügbaren Funkträger festgestellt werden, und diese Fehler an den Betreiber des fehlerhaften Funkübertragungssystems gemeldet werden.

2. Verfahren nach Anspruch 1, **dadurch gekennzeichnet, dass** die Qualität der verfügbaren Funkträger (12-14) anhand eines oder mehrerer der folgenden Parameter bestimmt wird: Datendurchsatz, Übermittlungsverzögerung, Kontinuität der Verfügbarkeit, Bitfehlerrate und Paritätsfehlerrate.

3. Verfahren nach einem der vorhergehenden Ansprüche, **dadurch gekennzeichnet, dass** die vorhandenen Informationen über die Qualität der verfügbaren Funkträger (12-14) zuvor von der mobilen Einheit erfasst und gespeichert wurden.

4. Verfahren nach einem der vorhergehenden Ansprüche, **dadurch gekennzeichnet, dass** die vorhandenen Informationen über die Qualität der verfügbaren Funkträger (12-14) der mobilen Einheit durch Dritte zur Verfügung gestellt wurden.

5. Verfahren nach einem der vorhergehenden Ansprüche, **dadurch gekennzeichnet, dass** die vorhandenen Informationen über die Qualität der verfügbaren Funkträger (12-14) in Abhängigkeit von geographischen Positionsdaten gespeichert sind.

6. Verfahren nach einem der vorhergehenden Ansprüche, **dadurch gekennzeichnet, dass** die vorhandenen Informationen über die Qualität der verfügbaren Funkträger (12-14) in Abhängigkeit von Zeitinformationen gespeichert werden.

7. Verfahren nach einem der vorhergehenden Ansprüche, **dadurch gekennzeichnet, dass** die von der mobilen Einheit (10) aktuell ermittelten Informationen über die Qualität der verfügbaren Funkträger mit den vorhandenen Informationen über die Qualität der verfügbaren Funkträgers verglichen werden, und die vorhandenen Informationen bei Bedarf aktualisiert werden.

8. Verfahren nach einem der vorhergehenden Ansprüche, **dadurch gekennzeichnet, dass** der Wechsel zu einem ausgewählten Funkträger nur erfolgt, wenn er voraussichtlich für eine vorbestimmte Nutzungsmindestzeit zur Verfügung steht.

9. Verfahren nach einem der vorhergehenden Ansprüche, **dadurch gekennzeichnet, dass** der Wechsel von einem aktuell verwendeten Funkträger zu einem neuen ausgewählten Funkträger nur erfolgt, wenn der bisher verwendete Funkträger für voraussichtlich eine vorbestimmte Ausfallzeit nicht mehr zur Verfügung steht.

**10.** Verfahren nach einem der vorhergehenden Ansprüche, **dadurch gekennzeichnet, dass** vor einem Wechsel von einem aktuell verwendeten Funkträger auf einen anderen Funkträger mit dynamischer Bandbreitenzuordnung eine Frühaktivierung des anderen Funkträgers erfolgt, um eine Zuordnung einer maximalen Bandbreite zu gewährleisten.

**11.** Vorrichtung zur Auswahl eines Funkträgers aus einer Anzahl von verfügbaren Funkträgern (12-14) bei Funkübertragungssystemen,
mit einer mobilen Einheit (10), die Mittel (20) zur Auswahl des jeweils besten Funkträgers in Abhängigkeit des Aufenthaltsortes der mobilen Einheit (10) und/oder des Zeitpunkts des Aufenthalts der mobilen Einheit (10) an dem Aufenthaltsort aufweist, wobei Mittel (15-17) zur aktuellen Ermittlung der Qualität der verfügbaren Funkträger vorhanden sind, und Mittel (12), die gespeicherte Messwerte des historischen Verlaufs der Qualität der verfügbaren Funkträger enthalten, wobei in der mobilen Einheit (10) Mittel vorgesehen sind, die in Abhängigkeit von der Bewegungsrichtung und Geschwindigkeit der mobilen Einheit (10) eine Vorhersage über die an einer zu passierenden geographischen Position und/oder zu einem vorbestimmten Zeitpunkt zu erwartende Qualität der Funkträger erstellen und anhand dieser Vorhersage eine Funkträgerauswahl vornehmen, **dadurch gekennzeichnet, dass** Mittel vorgesehen sind, mit denen Fehler in einem Funkübertragungssystem anhand eines Vergleichs der von der mobilen Einheit (10) aktuell ermittelten Informationen über die Qualität der verfügbaren Funkträger mit den vorhandenen Informationen über die Qualität der verfügbaren Funkträger feststellbar sind und die diese Fehler an den Betreiber des fehlerhaften Funkübertragungssystems melden.

**12.** Vorrichtung nach Anspruch 11, **dadurch gekennzeichnet, dass** die mobile Einheit Mittel zur Bestimmung der geographischen Position enthält.

**Claims**

**1.** Method for selecting a radio carrier from a number of available radio carriers in radio transmission systems (12-14), in which on the part of a mobile unit (10), a selection of the particular best radio carrier (12-14) is performed as a function of the location of the mobile unit (10), wherein the selection is carried out on the basis of information about the quality of the available radio carriers currently produced by the mobile unit (10) and that already existing, wherein a forecast about the quality of the radio carriers to be expected at a geographical position to be passed through and/or at a predetermined point in time is determined in the mobile unit (10) as a function of its movement direction and speed, and radio carrier selection is effected on the basis of this forecast, **characterised in that** errors in a radio transmission system are established on the basis of a comparison of the information about the quality of the available radio carriers currently determined by the mobile unit (10) with the existing information about the quality of the available radio carriers, and these errors are reported to the operator of the defective radio transmission system.

**2.** Method according to claim 1, **characterised in that** the quality of the available radio carriers (12-14) is determined on the basis of one or more of the following parameters: data throughput, transmission delay, continuity of availability, bit error rate and parity error rate.

**3.** Method according to one of the preceding claims, **characterised in that** the existing information about the quality of the available radio carriers (12-14) has been recorded and stored beforehand by the mobile unit.

**4.** Method according to one of the preceding claims, **characterised in that** the existing information about the quality of the available radio carriers (12-14) has been made available to the mobile unit by third parties.

**5.** Method according to one of the preceding claims, **characterised in that** the existing information about the quality of the available radio carriers (12-14) is stored as a function of geographical position data.

**6.** Method according to one of the preceding claims, **characterised in that** the existing information about the quality of the available radio carriers (12-14) is stored as a function of time information.

**7.** Method according to one of the preceding claims, **characterised in that** the information about the quality of the available radio carriers currently determined by the mobile unit (10) is compared with the existing information about the quality of the available radio carriers, and the existing information is updated as required.

**8.** Method according to one of the preceding claims, **characterised in that** the switch to a selected radio carrier is effected only when it is expected to be available for a predetermined minimum use time.

9. Method according to one of the preceding claims, **characterised in that** the switch from a currently used radio carrier to a new selected radio carrier is effected only when the hitherto used radio carrier is no longer available for probably a predetermined breakdown time.

10. Method according to one of the preceding claims, **characterised in that** before a switch from a currently used radio carrier to a further radio carrier with dynamic band-width allocation, early activation of the other radio carrier is effected to guarantee allocation of a maximum band width.

11. Device for selecting a radio carrier from a number of available radio carriers (12-14) in radio transmission systems, having a mobile unit (10) which has means (20) for selecting the particular best radio carrier as a function of the location of the mobile unit (10) and/or of the point in time of the location of the mobile unit (10) at the location, wherein means (15-17) for current determination of the quality of the available radio carriers are present, and means (12) which contain stored measured values of the historical course of the quality of the available radio carriers, wherein in the mobile unit (10) means are provided which construct a forecast about the quality of the radio carriers to be expected at a geographical position to be passed through and/or at a predetermined point in time as a function of the movement direction and speed of the mobile unit (10) and on the basis of this forecast perform radio carrier selection, **characterised in that** means are provided, with which errors in a radio transmission system can be established on the basis of a comparison of the information about the quality of the available radio carriers currently determined by the mobile unit (10) with the existing information about the quality of the available radio carriers and which report these errors to the operator of the defective radio transmission system.

12. Device according to claim 11, **characterised in that** the mobile unit contains means to determine the geographical position.

## Revendications

1. Procédé pour sélectionner une porteuse radioélectrique à partir d'un nombre de porteuses radioélectriques disponibles, dans des systèmes de transmission radio (12-14), selon lequel une sélection de la meilleure porteuse (12-14) en fonction de la position d'une unité mobile (10) est réalisée du côté de ladite unité mobile (10), étant précisé que la sélection est effectuée à l'aide d'informations déterminées de manière actualisée par l'unité mobile (10) et déjà existantes sur la qualité des porteuses disponibles, que dans l'unité mobile (10), en fonction de son sens de déplacement et de sa vitesse, une prévision est établie sur la qualité des porteuses à escompter au niveau d'une position géographique à franchir et/ou à un moment prédéfini, et que la sélection de porteuse se fait à l'aide de cette prévision, **caractérisé en ce que** des défauts dans un système de transmission radio sont constatés à l'aide d'une comparaison des informations, déterminées par l'unité mobile (10), sur la qualité des porteuses disponibles, avec les informations existantes sur la qualité des porteuses disponibles, et ces défauts sont signalés à l'opérateur du système de transmission radio défectueux.

2. Procédé selon la revendication 1, **caractérisé en ce que** la qualité des porteuses disponibles (12-14) est définie à l'aide de l'un au moins des paramètres suivantes : débit de données, retard de transmission, continuité de la disponibilité, taux d'erreurs sur les bits et taux d'erreurs de parité.

3. Procédé selon l'une des revendications précédentes, **caractérisé en ce que** les informations existantes sur la qualité des porteuses disponibles (12-14) ont été au préalable détectées et mises en mémoire par l'unité mobile.

4. Procédé selon l'une des revendications précédentes, **caractérisé en ce que** les informations existantes sur la qualité des porteuses disponibles (12-14) sont fournies à l'unité mobile par des tiers.

5. Procédé selon l'une des revendications précédentes, **caractérisé en ce que** les informations existantes sur la qualité des porteuses disponibles (12-14) sont mises en mémoire en fonction de données de position géographiques.

6. Procédé selon l'une des revendications précédentes, **caractérisé en ce que** les informations existantes sur la qualité des porteuses disponibles (12-14) sont mises en mémoire en fonction d'informations de temps.

7. Procédé selon l'une des revendications précédentes, **caractérisé en ce que** les informations déterminées de manière actualisée par l'unité mobile (10) sur la qualité des porteuses disponibles sont comparées aux informations existantes sur la qualité des porteuses disponibles, et les informations existantes sont au besoin actualisées.

**8.** Procédé selon l'une des revendications précédentes, **caractérisé en ce que** le passage à une porteuse sélectionnée ne se fait que si cette porteuse est vraisemblablement disponible pour une durée minimale d'utilisation prédéfinie.

**9.** Procédé selon l'une des revendications précédentes, **caractérisé en ce que** le passage d'une porteuse utilisée actuellement à une nouvelle porteuse sélectionnée ne se fait que si la porteuse utilisée jusque là n'est plus disponible pendant une durée d'interruption prédéfinie, vraisemblablement.

**10.** Procédé selon l'une des revendications précédentes, **caractérisé en ce qu'**avant un passage d'une porteuse utilisée actuellement à une autre porteuse avec une attribution dynamique de largeurs de bande, une activation précoce de l'autre porteuse a lieu afin de garantir une attribution d'une largeur de bande maximale.

**11.** Dispositif pour sélectionner une porteuse radioélectrique à partir d'un nombre de porteuses radioélectriques disponibles (12-14) dans des systèmes de transmission radio, avec une unité mobile (10) qui comporte des moyens (20) pour sélectionner la meilleure porteuse en fonction de la position de ladite unité mobile (10) et/ou du moment du séjour de celle-ci à cette position, étant précisé qu'il est prévu des moyens (15-17) pour la détermination actualisée de la qualité des porteuses disponibles, et des moyens (12) qui contiennent des valeurs de mesure mises en mémoire de l'historique de la qualité des porteuses disponibles, et qu'il est prévu dans l'unité mobile (10) des moyens qui, en fonction du sens de déplacement et de la vitesse de ladite unité mobile (10), établissent une prévision sur la qualité des porteuses escomptée au niveau d'une position géographique à franchir et/ou à un moment prédéfini, et réalisent à l'aide de cette prévision une sélection de porteuse,
**caractérisé en ce qu'**il est prévu des moyens grâce auxquels des défauts dans un système de transmission radio peuvent être constatés à l'aide d'une comparaison des informations, déterminées de manière actualisée par l'unité mobile (10), sur la qualité des porteuses disponibles, avec les informations existantes sur la qualité des porteuses disponibles, et qui signalent ces défauts à l'opérateur du système de transmission radio défectueux.

**12.** Dispositif selon la revendication 11, **caractérisé en ce que** l'unité mobile contient des moyens pour définir la position géographique.

**Fig. 1**

**Fig. 2**

$P_k \; (k=0\ldots\infty)$

Träger-
Qualitäts-
Funktion

18

$B_1$ → Modem → $Q_{A,1}$, $Q_{A,2}$, $Q_{A,m}$

$B_B$ → Modem → $Q_{B,1}$, $Q_{B,2}$, $Q_{B,m}$

$B_n$ → Modem → $Q_{n,1}$, $Q_{n,2}$, $Q_{n,m}$

$L_n(k)$

WF$_A$

WF$_B$

WF$_n$

$L_{n,k}(L_n(P_k))$

Datenbank

$L_{n,k}$

19

**Fig. 3**

14 (Träger C)   12 (Träger A)   13 (Träger B)

Trägerqualität

7 6 5 4 3 2 1 0

D   $T_0$   $T_{min}(v_1)$   $T_{min}(v_2)$   Route

**Fig. 4**

**Fig. 5**

**Fig. 6**

**Fig. 7**

Frühe Nutzung

14

Fig. 8

12

13

23

**IN DER BESCHREIBUNG AUFGEFÜHRTE DOKUMENTE**

**In der Beschreibung aufgeführte Patentdokumente**

- WO 0119108 A1
- US 5396647 A
- WO 0007384 A1
- US 2003003922 A1